Europäisches Patentamt

European Patent Office

Office européen des brevets

(19)

(11) Numéro de publication : **0 015 852 B1**

# (12) FASCICULE DE BREVET EUROPÉEN

(45) Date de publication du fascicule du brevet :
01.06.83

(21) Numéro de dépôt : **80420010.3**

(22) Date de dépôt : **25.01.80**

(51) Int. Cl.³ : **G 01 H   3/14**, G 01 H   3/12

(54) **Appareillage permettant la mesure de la puissance acoustique totale ou directive émise par une source quelconque.**

(30) Priorité : **29.01.79 FR 7902813**

(43) Date de publication de la demande :
**17.09.80 Bulletin 80/19**

(45) Mention de la délivrance du brevet :
**01.06.83 Bulletin 83/22**

(84) Etats contractants désignés :
**DE GB IT NL SE**

(56) Documents cités :
**US A 3 747 703**

**JOURNAL OF THE ACOUSTICAL SOCIETY OF AMERICA, vol. 53, no. 5, mai 1973, New York (US) A. J. RUDGERS « Determination of the farfield radiation of a noise source from nearfield measurements made with a Trott-array », pages 1411-1416**

(73) Titulaire : **SOCIETE POUR LA MESURE ET LE TRAITEMENT DES VIBRATIONS ET DU BRUIT - METRAVIB (Société Anonyme)
24, bis chemin des Mouilles
F-69130 Ecully (FR)**

(72) Inventeur : **Gaudriot, Lionel
Le Bourg
F-69380 Lozanne (FR)**
Inventeur : **Mercusot, Michel
4, rue Charles Porcher
F-69009 Lyon (FR)**

(74) Mandataire : **Laurent, Michel et al
Bureaux Chalin A1 20, rue Louis Chirpaz Boîte Postale 32
F-69130 Lyon-Ecully (FR)**

## Appareillage permettant la mesure de la puissance acoustique totale ou directive émise par une source quelconque

La présente invention concerne un appareillage perfectionné de mesure de la puissance acoustique totale ou directive émise par une source quelconque placée en milieu fluide, permettant à partir de mesures effectuées à proximité immédiate de la source, qui peut être soit fixe, soit mobile, de reconstituer le champ acoustique lointain.

Elle a trait plus particulièrement à un dispositif perfectionné permettant d'analyser *in situ* les champs vibratoires et acoustiques rencontrés et ce sans actions séparatives directes sur les sources (écrantage, encapsulage, dépose, etc...).

A ce jour, la mesure de la puissance acoustique des bruits émis des sources diverses est très difficile à réaliser lorsque ces sources sont fixes, voire pratiquement impossible de manière précise lorsqu'elles sont mobiles.

La solution la plus fréquente consiste à disposer la source de manière fixe dans un espace libre, par exemple en pleine nature et à mesurer le champ de pression lointain à l'aide d'un microphone que l'on déplace autour de la source à une distance importante de celle-ci. Ces mesures sont malaisées et longues, si l'on souhaite une bonne précision, par le fait qu'elles impliquent de réaliser un mouillage assez fin.

Par ailleurs, elles peuvent être perturbées par la présence d'autres sources sonores extérieures.

Une autre solution permettant d'avoir des mesures précises consiste à disposer la source dans une chambre anéchoïque (chambre sourde) simulant un espace acoustique libre.

Dans la mesure où l'on se contente de la connaissance de la puissance acoustique totale rayonnée indépendemment de toute notion de directivité on se place usuellement en chambre réverbérante, ce qui permet d'atteindre plus rapidement et avec une meilleure précision, la puissance.

Toutes ces méthodes ne donnent cependant pas entièrement satisfaction, sont en général longues ou supposent des investissements coûteux et ne peuvent pas être utilisées dans le cas de sources mobiles.

Pour ces raisons, il a déjà été proposé d'accéder à ce paramètre puissance totale par mesure directe de l'intensité acoustique au moyen d'une paire de microphones déplacée en un grand nombre de points d'une surface entourant la source ou sur la source elle-même. Un tel dispositif de mesure ne permet donc pas de déterminer la directivité de la source.

Par ailleurs, pour les mesures effectuées plus particulièrement en milieu sous-marin, il a été proposé d'utiliser des antennes acoustiques planes, constituées d'une pluralité d'hydrophones disposés sur un seul plan et permettant, à partir de mesures de pression faites dans le champ proche, de reconstituer le champ acoustique lointain (antennes de TROTT). Cette technique est notamment décrite dans la revue « Journal of the Acoustical Society of America » (Volume 53, Number 5, 1973, page 1412).

La présente invention concerne un dispositif ou appareillage qui surmonte les inconvénients des méthodes et dispositifs antérieurs car elle permet, à partir de mesures effectuées dans le champ proche de la source sonore considérée, cette source étant disposée en un milieu fluide, de reconstituer le champ lointain et de caractériser la puissance totale et directive de ladite source sans pour cela faire d'hypothèses sur la nature de la source.

Dans la suite de la description, par « puissance totale », on désigne la puissance moyenne rayonnée à distance par la source cumulée dans toutes les directions et par « puissance directive » on désigne la partie de cette puissance émise dans un angle solide défini autour d'une direction donnée. La dimension de l'angle solide défini ainsi, et qui sera baptisé « angle de résolution » par la suite, sera évoquée plus loin.

Pour opérer par calcul la reconstitution du champ lointain, on effectue à l'aide de microphones distribués sur des surfaces parallèles définissant un maillage, une double prise d'informations dans le champ acoustique proche en une multitude de points à proximité de la source, à savoir :

— la pression acoustique,

— l'accélération particulaire évaluée par différences entre les pressions de deux points rapprochés situés sur chacune des surfaces définies par le maillage de microphones.

D'une manière générale, le dispositif selon l'invention est du type comportant :

— une antenne acoustique disposée au voisinage de la source sonore et constituée d'au moins un capteur,

— un équipement associé à ladite antenne pour le traitement des informations données par cette antenne,

et il se caractérise par le fait que :

— le ou les capteurs formant l'antenne est constitué par réseau de microphones, distribués sur des surfaces parallèles en regard, formant entre eux des motifs à trois dimensions, la troisième dimension permettant le calcul de l'accélération particulaire du fluide,

— l'équipement de traitement associé à l'antenne comporte des modules sommateurs, amplificateurs et multiplicateurs permettant de réaliser :

le filtrage,

la sommation de toutes les informations de pression sur chaque surface du capteur, afin d'en

2

calculer la valeur moyenne spatiale,

puis les sommations des pressions moyennes et le calcul par différence des accélérations particulaires moyennes, afin de permettre l'élaboration des moyennes, au sens spatial, de l'accélération et de la vitesse particulaire S, de la pression et sa dérivée temporelle, ainsi que le calcul de la pression du champ lointain dans une direction déterminée et ce, soit par sommation de l'accélération moyenne et de la moyenne de la dérivée, soit par multiplicateur de la pression moyenne et de la vitesse moyenne.

On accède à la pression de champ lointain ou à son image énergétique dans une direction choisie par positionnement géométrique des capteurs ou par le choix de décalages temporels introduits sur les signaux de pression,

— soit sous forme de signal temporel ou sous forme de valeur efficace par la sommation avec ou sans décalages temporels des contributions élémentaires liées à ces grandeurs locales que sont la pression acoustique et l'accélération particulaire,

— soit sous forme d'une intensité acoustique directive en faisant le produit entre la pression moyenne et la vitesse élaborée sur la surface de mesure.

Ces deux procédures de traitement donnant accès à des résultats similaires par des calculs différents, mais supportées dans une large mesure par une même manière de prendre les informations dans le champ acoustique seront décrites parallèlement dans la suite de la description et l'on dénommera :

— la première procédure de traitement : « traitement additif »,

— la seconde procédure de traitement : « traitement multiplicatif ».

Dans la suite de la description, le mot « capteur » sera réservé à la dénomination d'un réseau tridimensionnel quelconque de microphones, le terme microphone désignant aussi bien un moyen permettant la prise d'informations de la pression acoustique en milieu aérien ou en milieu aquatique.

Eventuellement, l'équipement de traitement permet également de réaliser des retards électriques entre les microphones ou ensembles de microphones au sein d'un même capteur afin de procéder à une rotation fictive de la direction de calcul de la pression de champ lointain, ou bien encore d'introduire un décalage global entre les informations issues de chacun des capteurs.

Par ailleurs, l'équipement de traitement est avantageusement un équipement électronique et comporte un module multiplicateur moyen permettant d'évaluer les puissances d'interaction entre les zones couvertes par chacun des « capteurs ».

De préférence, les capteurs sont constitués d'un ensemble de microphones omnidirectionnels conventionnels, ponctuels, par exemple du type condensateur « electret » maintenus fixes les uns par rapport aux autres de manière à former une structure ajourée, uniforme ou non, constituée de motifs élémentaires rectangulaires, carrés, triangulaires ou irréguliers.

Eventuellement, les microphones pourraient être remplacés comme éléments de mesure de pression par des lignes ou des surfaces sensibles.

D'une manière générale la distance entre les surfaces maillées de microphones constitutives d'un même capteur est au plus égale au quart de la longueur d'onde acoustique minimum observée dans le cas où l'opération de différence entre pressions moyennes pour le calcul de l'accélération est faite de manière directe. Par exemple, pour des mesures faites jusqu'à 2 500 Hz, la distance maximum est de l'ordre de 30 mm.

L'espacement entre les microphones d'une même surface maillée ou grille, ce dernier terme étant utilisé par mesure de simplification dans la suite de la description, détermine la limite haute en fréquence qui est définie par l'usage envisagé.

Le maillage minimum souhaitable sur les grilles est tel que l'espacement entre les microphones d'une même grille soit de l'ordre de la demi-longueur d'onde acoustique à la fréquence la plus haute de la bande d'analyse, que le maillage soit régulier ou irrégulier.

La fréquence limite basse n'est pas fixée à priori par le capteur, autrement que par la coupure basse des entrées électroniques (liaisons capacitives, moins trois décibels (dB) à environ 20 Hz), et la limite inférieure liée au principe de l'évaluation n'est donnée :

— que par le rapport de couverture de la grille sur la source dans le mode de traitement dit additif ; or du fait de l'utilisation de deux capteurs, un capteur fixe et un capteur mobile, et du fait de l'évaluation de la puissance d'interaction entre ces deux capteurs, il est permis d'étendre la surface apparente de la grille,

— ou par une question de résolution angulaire de l'antenne dans le mode de traitement dit multiplicatif qui se traduit également en terme de dimensions par un rapport entre l'envergure e des capteurs et la longueur d'onde acoustique considérée qui doit être suffisant.

Par ailleurs, l'équipement de traitement associé aux capteurs selon l'invention est un équipement électronique qui est constitué de moyens conventionnels regroupés sous la forme d'un ensemble autonome (alimentation, batterie + et −), qui porte son propre chargeur ; cette électronique de conditionnement réalise des opérations de sommation des signaux de pression avec ou sans décalages temporels, de calcul de l'accélération par différenciation, de dérivation, d'intégration, et éventuellement de filtrage, afin de permettre l'élaboration des quatre grandeurs moyennes sur la surface de mesure nécessaires par groupes de deux au calcul de la pression de champ lointain soit par sommation :

— de l'accélération moyenne,

**0 015 852**

— et de la dérivée temporelle de la pression,
soit par multiplication :
— de la pression moyenne
— et de la vitesse moyenne.

L'invention sera cependant mieux comprise grâce à l'exemple de réalisation donné ci-après à titre illustratif mais non limitatif et qui est illustré par les schémas annexés :

les figures 1, 2 et 3 illustrent schématiquement, en perspective, différents types de capteurs selon l'invention,

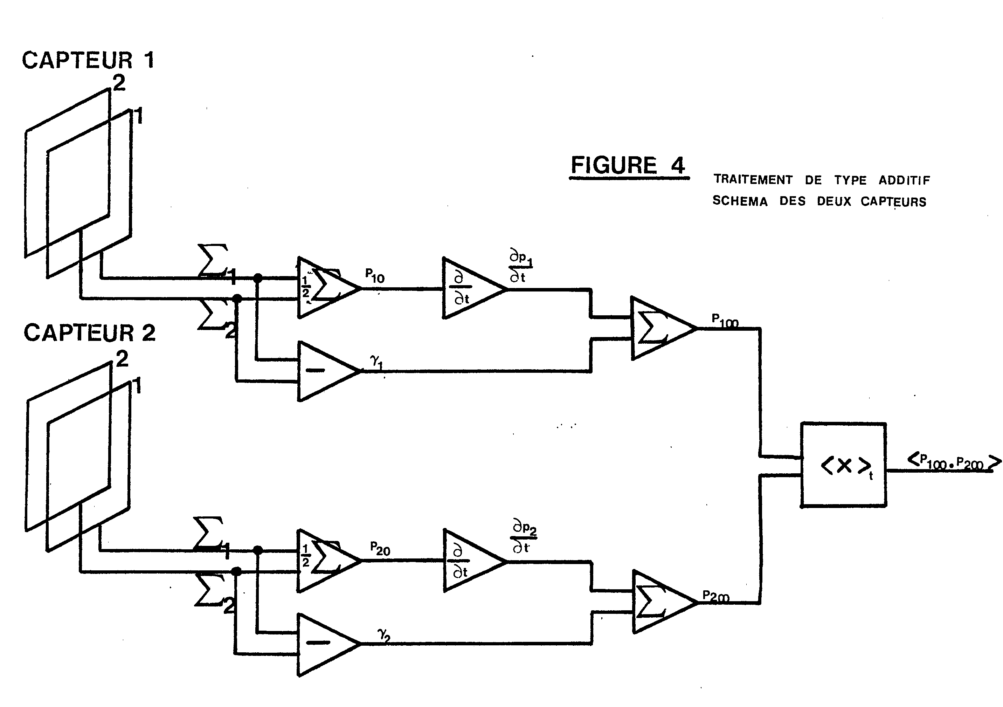

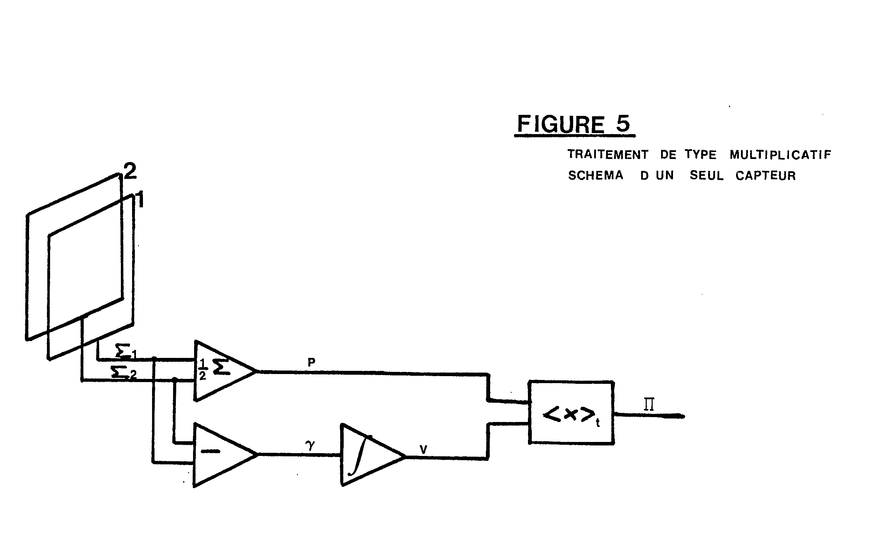

les figures 4 et 5 illustrent sous forme de diagrammes les deux formes de traitement utilisées pour élaborer la pression de champ lointain,

les figures 6 à 17 illustrent le cas particulier d'un mode de construction pour lequel les capteurs sont constitués de deux grilles parallèles à maillage régulier et un mode de traitement plus spécifiquement de type additif. Dans ces figures :

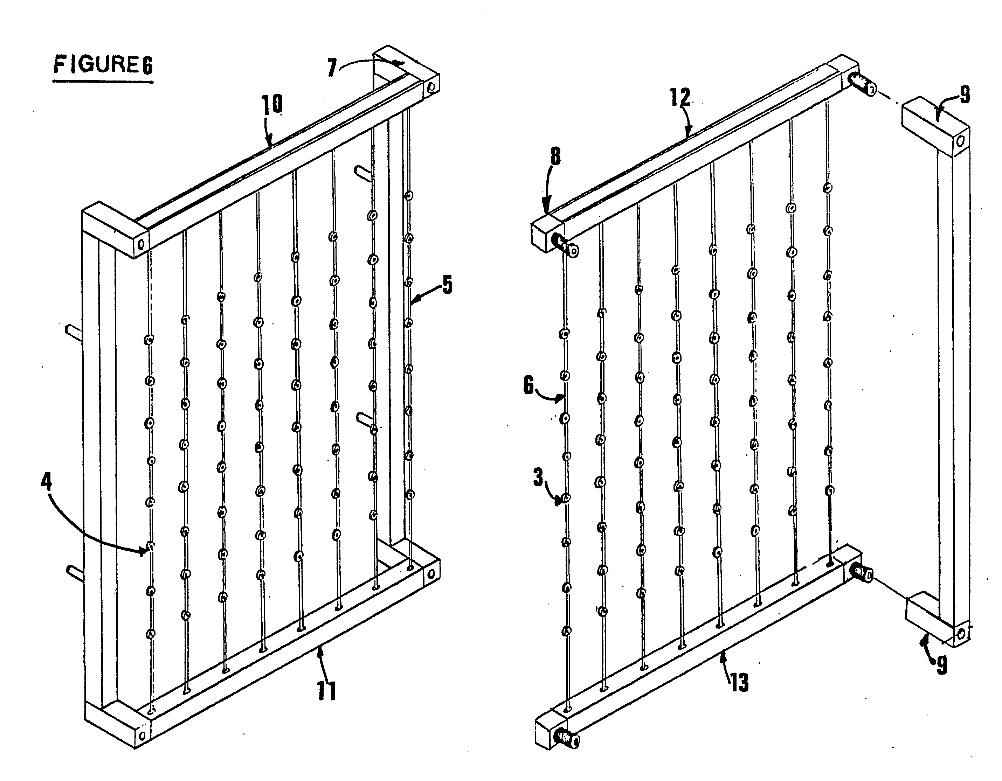

la figure 6 est une vue éclatée d'un mode de réalisation d'un tel dispositif permettant d'obtenir deux valeurs d'écartement entre les deux grilles formant un capteur,

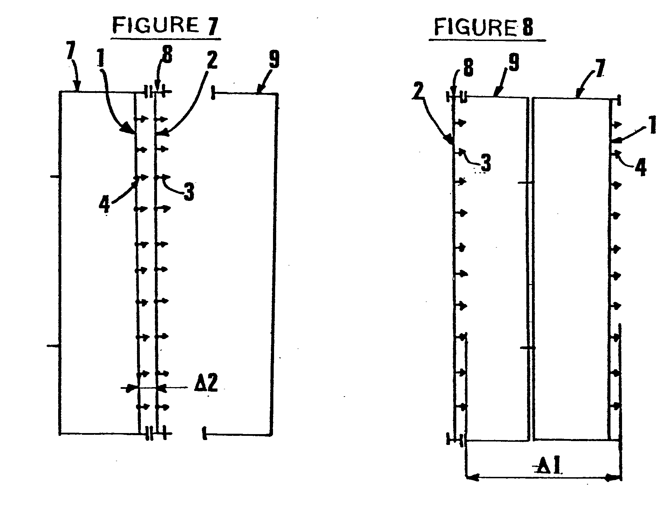

les figures 7 et 8 sont des vues de côté illustrant la manière dont l'écartement entre les deux grilles peut être modifié grâce au dispositif de la figure 6,

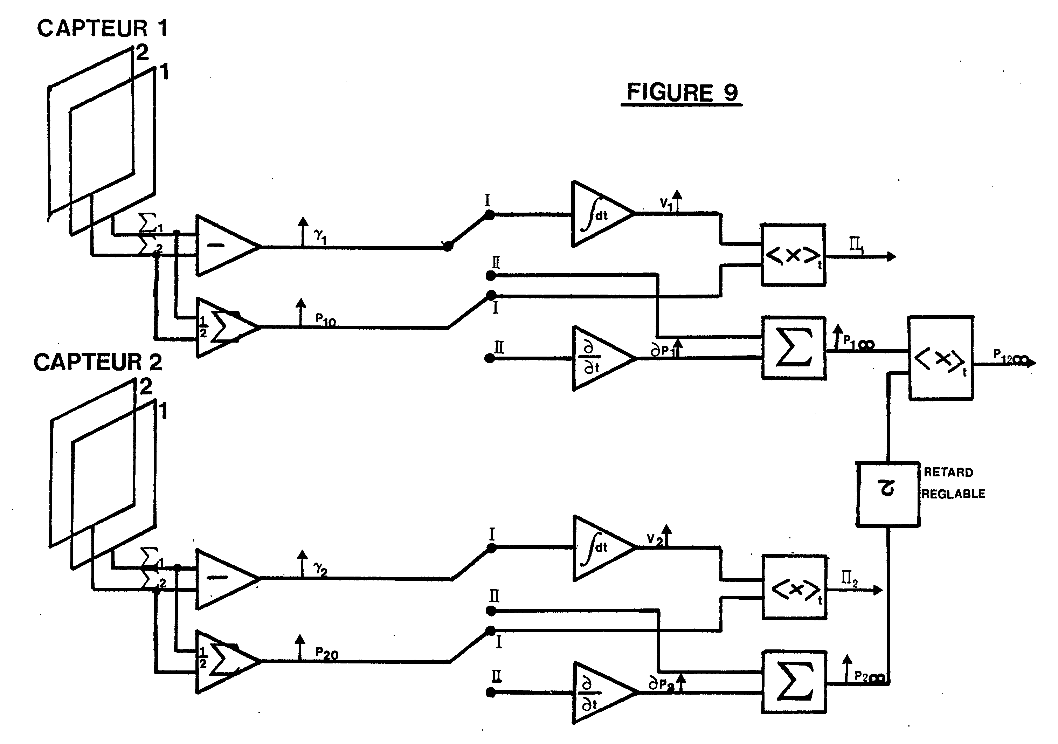

la figure 9 est un schéma de l'électronique de conditionnement associé aux capteurs selon l'invention,

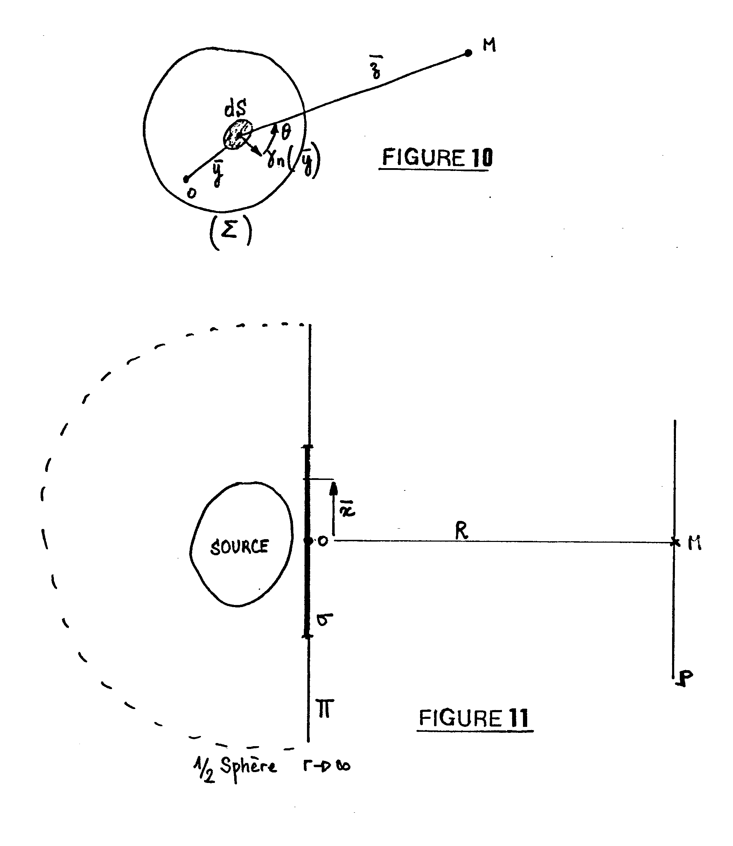

les figures 10 à 13 illustrent la manière dont sont obtenues les mesures réalisées à l'aide d'une telle installation,

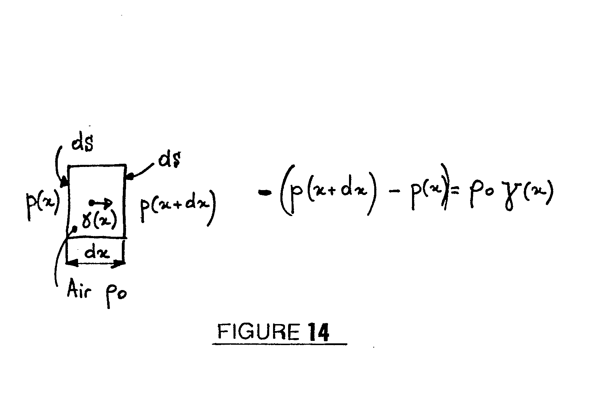

la figure 14 schématise l'évaluation de l'accélération des particules de fluide à partir de simples mesures de pression.

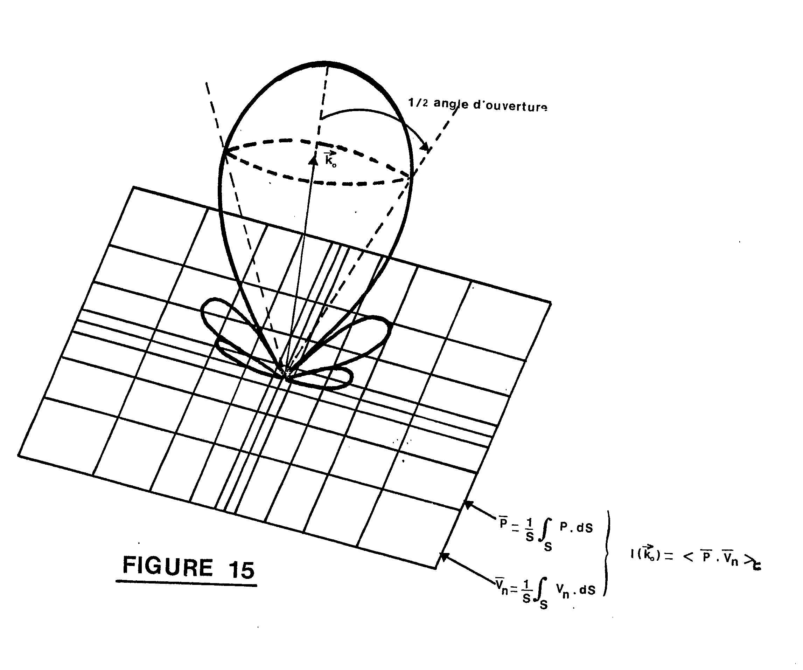

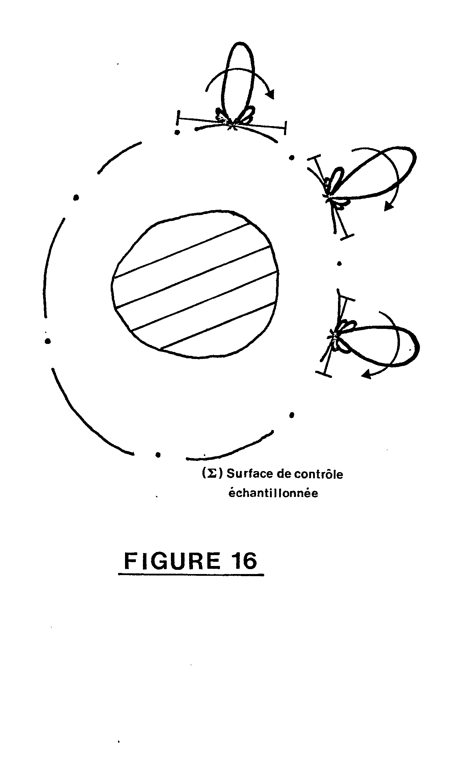

les figures 15 et 16 la mise en œuvre du traitement multiplicatif des informations,

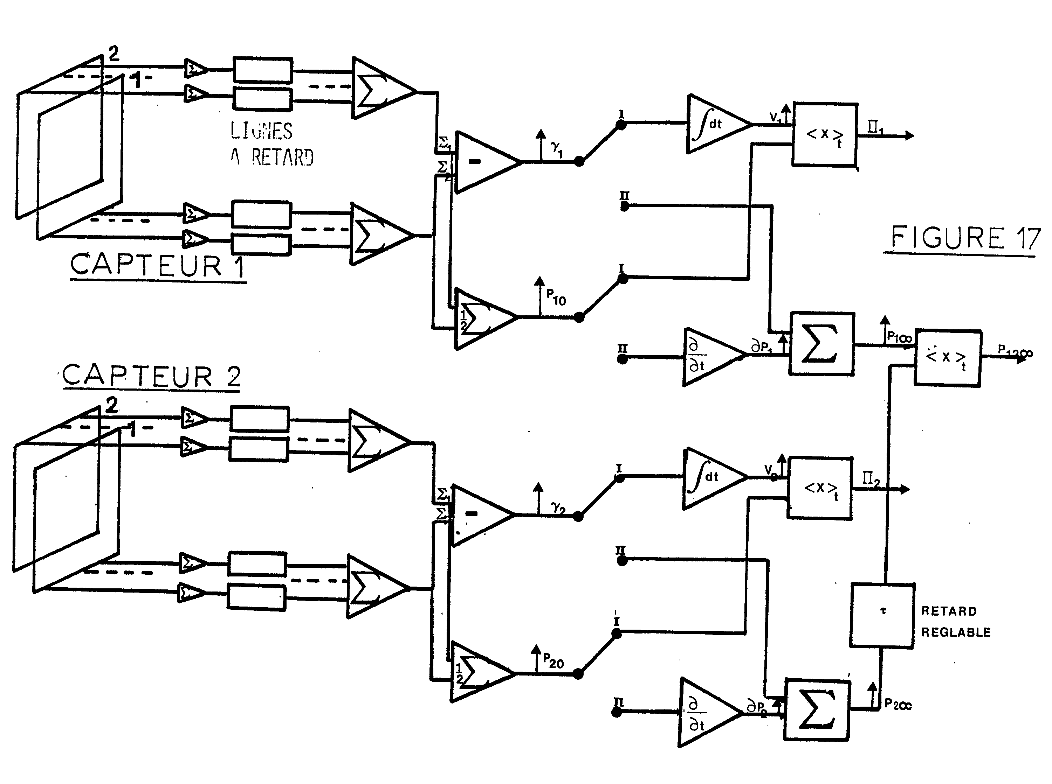

la figure 17 illustre une variante de l'ensemble de traitement, variante selon laquelle on effectue une rotation électrique de la direction de calcul.

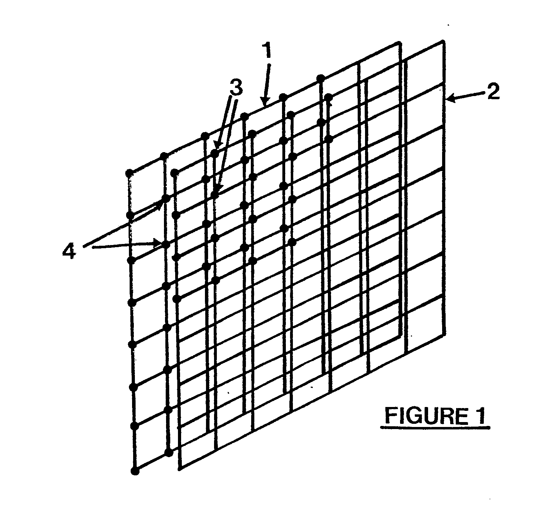

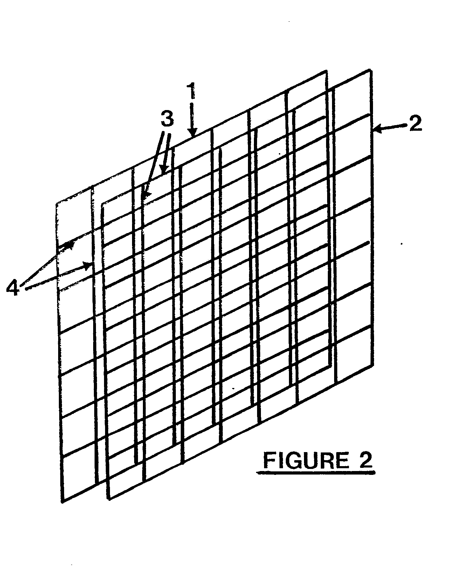

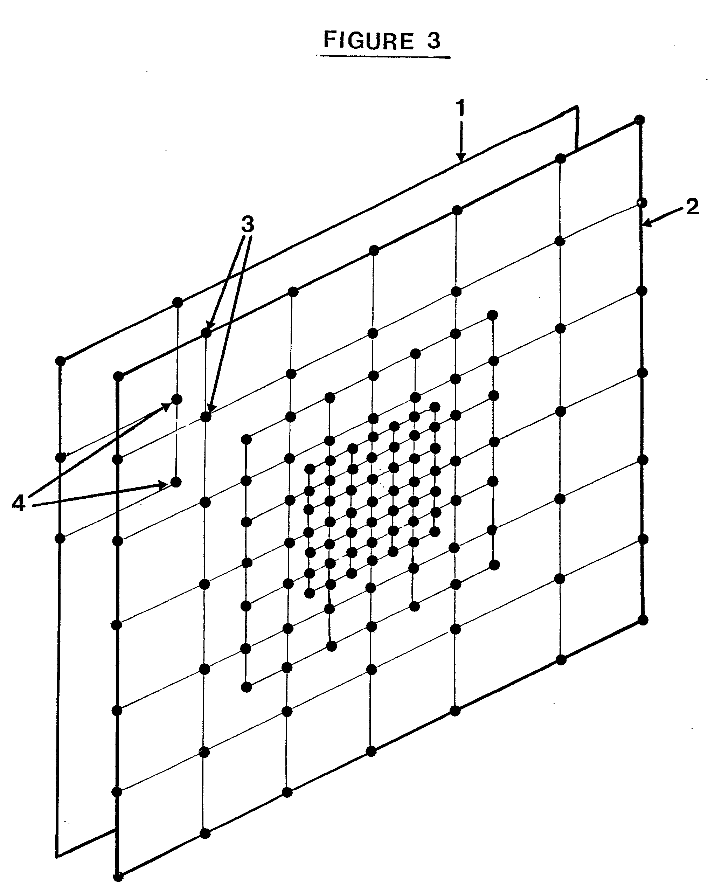

L'appareillage selon l'invention comprend deux capteurs plans constitués pour chacun, ainsi que cela est illustré aux figures 1, 2, 3, 6, 7 et 8 de deux grilles planes 1 et 2 formant un maillage bidimensionnel de microphones 3, 4 espacés régulièrement les uns des autres.

Ces deux grilles 1, 2 sont situées dans deux plans parallèles, espacés d'une distance $\Delta$, fonction de la plage de fréquences analysées et qui, en général, est comprise entre 20 mm et 200 mm pour la gamme de fréquences 100 Hz-2 500 Hz.

Dans le mode de réalisation illustré par les figures 6, 7 et 8, les microphones 3, 4 sont maintenus à égale distance les uns des autres au moyen de fils 5, 6 maintenus à leurs extrémités par un cadre rigide 7, 8.

Dans le cas présent, les cadres 7, 8 portant les grilles 1, 2 sont réalisés de telle manière que les microphones soient situés, soit dans deux plans proches l'un de l'autre (figure 7), soit au contraire, à une distance plus importante (figure 8). Dans ce dernier cas, des entretoises 9, dont une seule est représentée à la figure 6, permettent de maintenir l'écartement entre les deux grilles 1 et 2.

De préférence, les extrémités des fils 5, 6 maintenant les microphones 3, 4 sont réunies à l'intérieur de traverses creuses 10, 11, 12, 13 facilitant l'adaptation à l'ensemble d'électronique en renfermant une partie de cet ensemble, de façon que la liaison entre les capteurs et l'électronique principale s'effectue de manière aisée.

Dans le cas présent, on utilise comme microphones, des microphones du type « Electret », ces microphones étant pour chaque grille espacés de 70 mm afin de travailler jusqu'à 2 400 Hz et étant maintenus par l'intermédiaire d'un ou deux fils de nylon, tendus entre les traverses 10, 11 et 12, 13 de chacune des grilles. Chaque grille comporte 64 microphones et a des dimensions extérieures d'environ 50 cm par 50 cm.

L'électronique de calcul dont une forme de réalisation est illustrée à la figure 9 est, dans l'exemple décrit, pour partie portée par les capteurs et réalise de manière analogique la sommation sur chaque grille des informations de pression issues de tous les microphones situés sur la même grille. De ce fait, chaque capteur délivre deux signaux représentant les sommes $\Sigma$ relatives à chacune des grilles.

L'électronique principale calcule :
— $1/2\,(\Sigma_1 - \Sigma_2)$ qui est l'image de la moyenne spatiale de l'accélération particulaire normale au plan du capteur,
— $1/2\,(\Sigma_1 + \Sigma_2)$ qui est l'image de la moyenne spatiale de la pression dans un plan situé entre les deux grilles.

Ces deux grandeurs de base sont ensuite :
— pour la première, intégrée de manière analogique pour atteindre la vitesse,
— pour la seconde, dérivée de manière à être additionnée au terme d'accélération afin de donner une évaluation de la pression de champ lointain sur la perpendiculaire au plan des capteurs ou selon une autre orientation si on fait usage de décalages électriques entre microphones ou ensembles de microphones.

On dispose ainsi, pour chacun des capteurs :
— des vitesses moyennes sur le plan de chaque capteur : $V_1$, $V_2$,

4

— des accélérations moyennes sur le plan de chaque capteur : $\gamma_1$, $\gamma_2$,

— des pressions moyennes sur le plan de chaque capteur : $P_{10}$, $P_{20}$,

— des moyennes de la dérivée des pressions sur le plan de chaque capteur : $\delta P_1$, $\delta P_2$,

— des contributions à la pression lointaine des surfaces couvertes pour chaque capteur : $P_1 \infty$, $P_2 \infty$.

Enfin, par multiplication, on obtiendra :

— les puissances d'interaction $< P_1 \infty \cdot P_2 \infty > t$ avec éventuellement introduction d'un retard électrique.

La mise à disposition des grandeurs $P_{10}$ et $V_1$ ou $P_{20}$ et $V_2$ permet en outre d'obtenir une image énergétique du champ acoustique lointain, traitement dit multiplicatif, en élaborant les produits moyens temporels $< P_{10} \cdot V_1 > t$ ou $< P_{20} \cdot V_2 > t$ qui représentent chacun l'intensité acoustique traversant la surface du capteur (1 ou 2) et se propageant autour de la direction perpendiculaire au plan du capteur ou une autre direction donnée par usage de lignes à retard.

La mise en œuvre d'une telle installation est la suivante :

— les deux capteurs sont placés à proximité d'un bruiteur quelconque, fixe ou mobile, situé dans un milieu fluide ; ils permettent à partir de doubles mesures de pression effectuées sur deux surfaces dans le champ acoustique proche, d'appréhender notamment :

— la puissance active émise autour des directions choisies par positionnement géométrique ou électrique de l'ensemble des deux capteurs,

— la puissance active totale par sommation des informations directives.

De cette manière, il est possible de réaliser une reconstitution énergétique du champ acoustique lointain, et ce en faisant appel à des principes et formulations théoriques connus qui sont :

— le principe de HUYGENS,

— et la formulation intégrale de HELMHOLTZ pour ce qui se réfère au traitement dit additif.

Ainsi que cela est illustré par les figures 10 à 13, il est possible selon le principe de HUYGENS par le biais de la représentation intégrale de HELMHOLTZ de reconstituer le champ acoustique à l'extérieur d'une surface $\Sigma$ fermée, entourant des sources, par la sommation des effets de sources élémentaires réparties sur $\Sigma$.

Ces sources élémentaires sont de deux types :

— sources de mouvement (ou monopolaires), caractérisées par $\gamma(t)$, accélération particulaire,

— sources d'effort (ou dipolaires), caractérisées par $p(t)$ pression acoustique.

L'expression de la pression en dehors de $(\Sigma)$ s'exprime alors par :

$$PM(\overline{z}, t) = \frac{1}{4\pi} \int_{\Sigma} \frac{1}{|\overline{z}|} \left( \rho_0 \gamma_n(\overline{y}) + \frac{1}{c} \frac{\partial P}{\partial t}(\overline{y}) \cos\theta \right) \left( t - \frac{\overline{z}}{c} \right) dS$$

Par suite, cette formulation permet de calculer la pression en un point M quelconque situé à distance de la source.

Le calcul étant reporté en champ lointain, il sera aisé ensuite de passer à une notion de puissance en écrivant que l'intensité acoustique I propagée dans la direction de calcul s'exprime simplement en fonction de la pression par :

$$I = \frac{P^2}{\rho c}.$$

A partir de cela et ainsi qu'illustré schématiquement aux figures 10 et 11, il est possible de réaliser pratiquement cette opération à partir de la mesure de l'accélération particulaire et de la pression sur une surface $\Sigma$ fermée, choisie de manière particulière, dans la mesure où elle est constituée par un plan $\pi$ proche de la source et qui se referme à l'infini par une sphère S pour l'englober.

Le choix de cette surface plane correspond au cas particulier de réalisation décrit précédemment à base ce capteurs plans. On peut imaginer des choix autres mais cela au détriment du traitement électronique qui devient plus lourd.

Dans cette situation, on peut admettre qu'en un point M d'un plan P parallèle au plan $\pi$, situé sur une normale au plan $\pi$ issue de la source et situé à une distance R grande de la source, la pression s'exprime par :

$$\rho(R, t) = \frac{1}{4\pi R} \int_{\sigma} \left[ \rho_0 \gamma(\overline{x}) + \frac{1}{c} \frac{\partial P}{\partial t}(\overline{x}) \right] \left( t - \frac{R}{c} \right) dS$$

Cela se justifie par deux arguments :

1. La contribution au point M des sources situées sur S tend vers 0, lorsque $R \rightarrow \infty$ (propagation de l'énergie vers l'extérieur),

2. On montre physiquement que les contributions des sources fictives le long de $\pi$ tendent à décroître lorsque l'on s'éloigne de la source.

Dans ces conditions, il apparaît une « aire utile » sur $\pi$ appelée $\sigma$ dont la taille est fonction de l'envergure des zones de cohérence du champ source relativement à l'envergure de la source.

Cependant, dans la majorité des cas la taille de σ est de l'ordre de grandeur de celle de la source, c'est-à-dire que la source doit être « couverte ».

Dans ces conditions, on peut admettre que dans la réalité la zone σ concernée sur le plan π est de dimension suffisamment faible devant R pour que les ondes issues des sources élémentaires situées sur cette zone soient planes en M et parallèles à P. Cela signifie que l'aire σ concernée sur le plan π est, vue de M, contenue dans un angle solide faible.

Dans ces conditions, on peut admettre qu'en M, on reçoit les contributions élémentaires des sources situées sur l'aire σ, normalement au plan π, d'où la suppression du terme cos θ et l'hypothèse de l'égalité des temps de parcours pour tous les points.

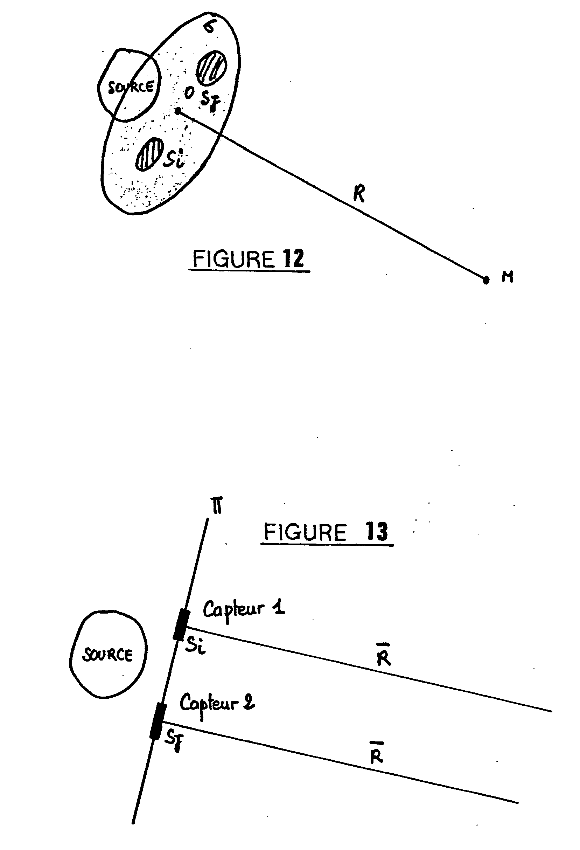

Conformément à l'invention et ainsi que cela est illustré par les figures 12 et 13, on peut réaliser la description du plan π par partie au moyen de deux capteurs couvrant les surfaces élémentaires *si, sj* (voir figure 12), dont les dimensions sont définies à la fois par des paramètres liés à la physique des phénomènes et par des paramètres liés à la géométrie de la classe des équipements visés. Cette partition n'est pas impérative mais elle ouvre la possibilité de réaliser une analyse des mécanismes de rayonnement.

On écrira donc dans ce cas :

$$P(R, t) = \sum_i \left\{ \frac{1}{4\pi R} \int_{si} \left[ \rho_0\, \gamma\left(\overline{x}, t - \frac{R}{c}\right) + \frac{1}{c} \frac{\partial P}{\partial t}\left(\overline{x}, t - \frac{R}{c}\right) \right] dS \right\}$$

$$= \sum_i \left\{ \frac{1}{4\pi R} \int_{si} F\left(\overline{x}, t - \frac{R}{c}\right) dS \right\} .$$

Dans la mesure où les informations issues des positions *si* décrivant σ ne sont pas connues dans le même temps, il est nécessaire de passer à une notion statistique de puissance moyenne :

$$\langle P^2(R, t) \rangle_t = \frac{1}{16\pi^2 R^2} \left\langle \left\{ \sum_i \int_{si} F\left(\overline{x}, t - \frac{R}{c}\right) dS \right\}^2 \right\rangle_t$$

$< \ >_t$ signifie valeur moyenne temporelle

$$\langle P^2(R, t) \rangle_t = \frac{1}{16\pi^2 R^2} \left\{ \sum_i \left\langle \left( \int_{si} F\left(\overline{x}, t - \frac{R}{c}\right) dS \right)^2 \right\rangle_t 2\sum_{i,j} \left\langle \left( \int_{si} F\left(\overline{x}, t - \frac{R}{c}\right) d\delta \right) \times \right. \right.$$
$$\left. \left. \times \left( \int_{sj} F\left(\overline{x}, t - \frac{R}{c}\right) dS \right) \right\rangle_t \right\} .$$

En conséquence, le processus opératoire est le suivant (figure 14).

a) Calage angulaire du premier capteur sur une surface *si* définissant une direction d'évaluation de la pression de champ lointain. Cette opération peut être réalisée soit par rotation effective des capteurs, soit par rotation fictive à l'aide de lignes à retard et pondération en cos θ des sources de pression.

L'électronique associée aux capteurs selon l'invention élabore :

$$\langle P_1^2 \rangle_t = K \left\langle \left( \int_{si} F\left(\overline{x}, t - \frac{R}{c}\right) dS \right)^2 \right\rangle_t .$$

K = constante définie conventionnellement, terme proportionnel à la puissance partielle, relative à la surface *si*, dans la direction choisie. Le signal temporel $P_1(t)$ est bien sûr disponible.

b) Exploration des positions voisines *sj* à l'aide du second capteur donnant accès aux puissances d'interaction entre *si* et *sj*. Le second capteur est situé dans le même plan que *si* :

$$\langle Pij^2 \rangle_t = K \left\langle \int_{si} F(\overline{x}, t) \cdot \int_{sj} F(\overline{x}, t) \right\rangle_t .$$

c) Déplacement itératif sur σ du premier capteur en une autre position *si*, et répétition des opérations a), b).

L'ensemble des positions *si, sj* doit permettre la couverture totale de la surface σ définie précédemment, couverture qui ménage la possibilité d'élaborer l'ensemble des produits

$$\left\langle \int_{si} \cdot \int_{sj} \right\rangle .$$

6

d) Sommations des différents termes $< pi^2 >$ et $< pij^2 >$ donnant accès à la densité de puissance autour de la direction normale à $\pi$ ou une direction décalée de $\theta$ si on use de décalages électriques.

e) Rotation des capteurs pour effectuer l'évaluation dans d'autres angles, l'intégration sur tout l'espace de ces densités de puissance permet le calcul de la puissance totale.

Il faut noter : .

1. Si le choix de la taille des capteurs, qui est fait par l'expérimentateur, a été tel qu'un seul capteur puisse couvrir la source, les opérations b), c), d) dont superflues et un seul capteur est nécessaire.

2. Certaines procédures pratiques permettent d'alléger les opérations b) et c), la définition qui en est donnée ici étant la définition rigoureuse.

3. La valeur de l'angle dit « angle de résolution » $\Psi$ qui définit la tolérance angulaire de l'estimation est fonction de l'envergure (e) relative du capteur (taille réelle ou taille fictive dans le cas de deux capteurs déplacés) et de la longueur d'onde acoustique et vaut au maximum :

$$\Psi \sim 2 \, \text{Arc} \, \sin \frac{\lambda}{e} \, .$$

La figure 9 est une vue schématique de l'ensemble de traitement associé au dispositif selon l'invention.

Conformément à l'invention et selon la formulation (1) :

$$P\left(R, t + \frac{R}{c}\right) = \frac{1}{4 \, \pi Rc} \int_{\sigma} \left[ \rho_0 \, c\gamma(\overline{x}, t) + \frac{\partial P}{\partial t}(\overline{x}, t) \right] dS$$

le capteur doit réaliser une double prise d'informations sur sa surface :
— la pression acoustique pour ensuite en calculer la dérivée temporelle,
— l'accélération particulaire normale à son plan.

Pour se faire, les capteurs sont constitués comme dit précédemment, d'un ensemble de microphones omnidirectionnels disposés selon une structure déterminée, ouverte, et donnant un réseau à base de rectangles, carrés ou triangles, voire irrégulière. De plus, ces microphones sont disposés sur deux plans parallèles espacés, ce qui permet l'évaluation de l'accélération des particules de fluide à partir de simples mesures de pression (figure 14).

Les figures 15 et 16 illustrent la justification physique du mode de traitement dit multiplicatif selon l'invention.

Si l'on se reporte à ces figures, en se plaçant sur une surface située au voisinage d'une source acoustique et en évaluant comme il l'a été dit au moyen d'un capteur, tel qu'il a été décrit précédemment, la pression moyenne sur la surface du capteur, et la vitesse moyenne sur ladite surface le produit moyen temporel :

$$< p(t) \cdot \overline{V}n(t) >_t$$

représente alors (figure 15) l'intensité acoustique moyenne propagée autour de la direction normale au capteur ou une autre direction artificiellement créée par des retards électriques, dans un angle solide lié au rapport de $e$, dimension de l'antenne à $\lambda$ longueur d'onde acoustique.

Dans ce cas, le processus opératoire est le suivant et peut être satisfait par l'utilisation d'un capteur unique :

a) Mise en place du capteur au voisinage de la source ; calcul en cette position du produit moyen $< p(t) \cdot Vn(t) >_t$.

b) Exploration d'autres directions par rotation mécanique ou électronique (lignes à retard) du capteur. Ceci conduit à l'obtention d'un diagramme local de directivité.

c) Répétition de l'opération en un certain nombre de points autour de la source (figure 16).

La sommation de ces diagrammes, direction par direction, donne accès après multiplication par la valeur de la surface $\Sigma$ à la puissance totale émise dans l'angle de résolution et autour de la direction choisie.

Cette grandeur est tout à fait comparable à un coefficient de distance près à la grandeur obtenue par la première méthode de traitement dans la mesure où cette dernière est estimée en valeur efficace.

L'invention n'est cependant pas limitée aux modes de réalisations décrits précédemment, mais elle en couvre également toutes les variantes, qui sont équivalentes aux yeux de l'homme de l'art.

Ainsi, il est possible de compenser un décalage entre capteurs par une ligne à retard pour effectuer des mesures sur des plans décalés. Cela est utile dans le cas du choix d'une surface de mesure faite de portions de plans décalés, en vue de la recherche d'une surface épousant au mieux une machine, ou pour évaluer des vitesses de phase apparentes, etc...

On peut également évaluer une impédance moyenne sur le plan du capteur :

$$< P > \overline{x} / < v > \overline{x}.$$

Il est envisageable d'avoir une rotation électrique des directions de calcul, notamment par l'utilisation de lignes à retard tel que cela est représenté à la figure 17.

7

Un tel appareillage permet de reconstituer rigoureusement, si nécessaire, le diagramme de rayonnement d'une source quelconque à partir des mesures en champ proche et d'associer, moyennant des considérations physiques pratiques la zone couverte par l'antenne à une zone source en regard physiquement séparable (tache de champ en cohérence) et par là, de hiérarchiser les contributions partielles de ces zones dans une direction donnée.

Il est particulièrement intéressant pour l'analyse des caractéristiques de rayonnement acoustique de sources fixes et convient également pour l'analyse des caractéristiques de sources en mouvement (par exemple sources liées à des véhicules) et peut être adapté facilement afin de lui permettre de travailler dans un écoulement ou d'effectuer des mesures sur un véhicule en mouvement avec des antennes embarquées, etc...

Enfin, il est possible de réaliser une électronique englobant les deux modes de traitement à savoir le traitement multiplicatif, et le traitement additif tels qu'ils sont schématisés à la figure 9.

**Revendications**

1. Appareillage de mesure de la puissance acoustique totale ou directive émise par une source quelconque placée dans un milieu fluide permettant, à partir de mesures de pression effectuées dans le champ acoustique proche de la source sonore considérée, de reconstituer le champ acoustique lointain par un traitement de type additif, avec ou sans décalages temporels des contributions élémentaires de sources acoustiques fictives situées sur une surface disposée au voisinage de la source, du type comportant :
— une antenne acoustique disposée à proximité de la source sonore et constituée d'au moins un capteur,
— un équipement associé à ladite antenne pour le traitement des informations données par cette antenne, caractérisé par le fait :
— que le ou les capteurs formant l'antenne est/sont constitué/s par un réseau de microphones (3-4), distribués sur des surfaces parallèles (1-2) en regard, formant entre eux des motifs à trois dimensions, la troisième dimension permettant le calcul de l'accélération particulaire du fluide,
— que l'équipement de traitement associé à l'antenne comporte des modules sommateurs, amplificateurs et multiplicateurs, permettant de réaliser :
le filtrage,
la sommation de toutes les informations de pression sur chaque surface (1-2) du capteur, afin d'en calculer la valeur moyenne spatiale,
puis les sommations des pressions moyennes et le calcul par différence des accélérations particulaires moyennes, afin de permettre l'élaboration des moyennes, au sens spatial, de l'accélération et de la vitesse particulaire, de la pression et sa dérivée temporelle, ainsi que le calcul de la pression du champ lointain dans une direction déterminée et ce, soit par sommation de l'accélération moyenne et de la moyenne de la dérivée, soit par multiplication de la pression moyenne et de la vitesse moyenne.

2. Appareillage selon la revendication 1 caractérisé par le fait que l'antenne est constituée de deux capteurs formés chacun par un réseau tridimensionnel de microphones constitués en un ensemble de deux grilles planes parallèles (1-2), les microphones (3-4) formant entre eux des motifs réguliers à trois dimensions de forme parallélépipédique.

3. Appareillage selon l'une des revendications 1 et 2, caractérisé par le fait que les microphones (3-4) sont ponctuels.

4. Appareillage selon l'une des revendications 1 à 3, caractérisé par le fait que l'équipement de traitement comprend des moyens permettant de réaliser l'opération de sommation des pressions après introduction de retards électriques entre microphones ou ensembles de microphones au sein d'un même capteur, afin de procéder à une rotation fictive de la direction de calcul de la pression de champ lointain.

5. Appareillage selon l'une des revendications 2 à 4, caractérisé par le fait que les capteurs sont orientables mécaniquement et constitués pour chacun de deux grilles planes (1) et (2) écartées l'une de l'autre d'une distance éventuellement variable avec les bandes de fréquence analysées et équipées de microphones (3) et (4) omnidirectionnels.

6. Appareillage selon l'une des revendications 2 à 5, caractérisé par le fait que l'espacement entre les grilles (1) et (2) de microphones (3) et (4) est au plus égal au quart de la longueur d'onde acoustique minimum observée dans le cas où l'opération de différence entre pressions moyennes pour le calcul de l'accélération est faite de manière directe.

7. Appareillage selon l'une des revendications 2 à 5, caractérisé en ce que les microphones (3) et (4) de chaque grille (1) et (2) au sein de chaque capteur forment entre eux des motifs carrés dont le côté mesure la demi-longueur d'onde acoustique minimum observée.

**Claims**

1. Apparatus for measuring the total or directional acoustic power emitted by any source placed in a

8

# 0 015 852

fluid medium, making it possible, from pressure measurements taken in the acoustic nearfield of the sound source in question, to reconstitute the acoustic farfield by processing of the additive type, with or without time delays of the elementary contributions of imaginary acoustic sources located on a surface arranged in the vicinity of the source, the said apparatus being of the type comprising :

— an acoustic antenna arranged near the sound source and consisting of at least one sensor, and
— equipment associated with the said antenna for processing the data provided by this antenna, characterized in that :
— the sensor or sensors forming the antenna consists/consist of an array of microphones (3-4) distributed over opposite parallel surfaces (1-2) and forming three-dimensional units between one another, the third dimension making it possible to calculate the particle acceleration of the fluid, and
— the processing equipment associated with the antenna includes summing, amplifying and multiplying mudoles making it possible to effect :
the filtering,
the summing of all the pressure data over each surface (1-2) of the sensor, in order to calculate the mean value with respect to space,
and then the summing of the mean pressures and the calculation of the mean particle accelerations by difference, in order to make it possible to process the mean values, with respect to space, of the acceleration and the particle speed, of the pressure and of its derivative with respect to time, and also the calculation of the pressure of the farfield in a given direction, either by summing the mean acceleration and the mean of the derivative, or by multiplying the mean pressure by the mean speed.

2. Apparatus according to Claim 1, characterised in that the antenna consists of two sensors each formed by a three-dimensional array of microphones consisting of a set of two parallel planar grids (1-2), the microphones (3-4) forming regular three-dimensional units, of parallelepipedal shape, with one another.

3. Apparatus according to one of Claims 1 and 2, characterised in that the microphones (3-4) are point microphones.

4. Apparatus according to one of Claims 1 to 3, characterised in that the processing equipment comprises means making it possible to carry out the operation of summing the pressures after the introduction of electrical delays between microphones or sets of microphones within one and the same sensor, in order to effect an imaginary rotation of the direction of calculation of the farfield pressure.

5. Apparatus according to one of Claims 2 to 4, characterised in that the sensors are orientatable mechanically and each consist of two planar grids (1) and (2) separated from one another by a distance which may vary with the frequency bands analysed, and equipped with omnidirectional microphones (3) and (4).

6. Apparatus according to one of Claims 2 to 5, characterised in that the separation between the grids (1) and (2) of microphones (3) and (4) is equal to at most one quarter of the minimum acoustic wavelength observed in the case where the operation of measuring the distance between mean pressures for calculating the acceleration is carried out directly.

7. Apparatus according to one of Claims 2 to 5, characterised in that the microphones (3) and (4) of each grid (1) and (2), within each sensor, from square units with one another, the side length of which is one half of the minimum acoustic wavelength observed.


**Ansprüche**

1. Einrichtung zur Messung der totalen oder richtungsabhängigen Schall-Leistung einer beliebigen, in einem Fluid befindlichen Schallquelle, mit welcher, ausgehend von Druckmessungen im akustischen Feld nahe der betrachteten Schallquelle, das entferntere akustische Feld rekonstituierbar ist durch eine Verarbeitung additiven Typs — mit oder ohne zeitliche Verschiebungen — der Teilwerte von fiktiven Schallquellen, die auf einer Fläche in der Nähe der betrachteten Schallquelle liegen, mit
— einer akustischen Antenne, die in Nähe der Schallquelle angeordnet ist und aus mindestens einem Meßwertaufnehmer besteht,
— einer mit der Antenne verbundenen Einrichtung für die Verarbeitung der von dieser gegebenen Informationen, dadurch gekennzeichnet,
— daß der oder die Meßwertaufnehmer, welche die Antenne bilden aus einem Metzwerk von Mikrofonen (3,4) aufgebaut ist/sind, die auf parallelen, hintereinander angeordneten Flächen (1,2) derart verteilt sind, daß sie miteinander dreidimensionale Muster bilden, wobei die dritte Dimension die Berechnung der Partikelbeschleunigung des Fluids ermöglicht,
— daß die an die Antenne angeschlossene Datenverarbeitungseinrichtung Summierer-, Verstärker- und Multiplizierer-Module aufweist zur Durchführung :
der Filterung,
der Summierung aller Druck-Informationen auf jeder Fläche (1,2) des Meßwertaufnehmers, um daraus den räumlichen Mittelwert zu errechnen,
und daran anschließend der Summierungen der mittleren Drücke und der Differenz-Berechnung der mittleren Partikelbeschleunigung, um die Ausarbeitung der räumlichen Mittelwerte der Beschleunigung und der Geschwindigkeit der Partikel, des Druckes und seine Differentialquotienten nach der Zeit, sowie die Berechnung des Druckes des entfernteren Feldes in einer bestimmten Richtung zu ermöglichen, entweder durch Summierung der mittleren Beschleunigung und des Mittelswertes des Differentialquotienten oder durch Multiplikation des mittleren Druckes mit der mittleren Geschwindigkeit.

2. Einrichtung nach Anspruch 1, dadurch gekennzeichnet, daß die Antenne aus zwei Meßwertaufnehmern gebildet ist, von denen jeder aus einem dreidimensionalen Netzwerk von Mikrofonen besteht, die in einer Gesamtheit von zwei ebenen, parallelen Gittern (1, 2) angeordnet sind, worin die Mikrofone (3, 4) miteinander regelmäßige dreidimensionale Muster in Parallelepipedform bilden.

3. Einrichtung nach Anspruch 1 oder 2, dadurch gekennzeichnet, daß die Mikrofone (3, 4) punktförmig (Kugelmikrofone) sind.

4. Einrichtung nach einem der Ansprüche 1 bis 3, dadurch gekennzeichnet, daß die Datenverarbeitungseinrichtung Mittel umfaßt, die die Durchführung der Operation des Summierend der Drücke nach Einführung elektrischer Verzögerungen zwischen Mikrofon oder Mikrofon-Gruppen innerhalb des gleichen Meßwertaufnehmers ermöglichen, um eine fiktive Rotation der Richtung der Berechnung des Druckes im entfernten Feld vorzunehmen.

5. Einrichtung nach einem der Ansprüche 2 bis 4, dadurch gekennzeichnet, daß die Meßwertaufnehmer mechanisch verstellbar sind und ausgebildet sind als jedes der zwei ebenen Gitter (1) und (2), die in einem eventuell mit den abgetasteten Frequenzbereichen variablen Abstand voneinander angeordnet und mit Raummikrofonen (3) und (4), ausgerüstet sind.

6. Einrichtung nach einem der Ansprüche 2 bis 5, dadurch gekennzeichnet, daß in dem Fall, wo die Differenzbildung zwischen Druckmittelwerten für die Berechnung der Beschleunigung direkt erfolgt, der Abstand zwischen den Gittern (1) und (2) mit den Mikrofonen (3) und (4) höchstens ein Viertel der Länge der kleinsten beobachteten akustischen Well beträgt.

7. Einrichtung nach einem der Ansprüche 2 bis 5, dadurch gekennzeichnet, daß die Mikrofone (3) und (4) jedes Gitters (1) und (2) inerhalb eines jeden Meßwertaufnehmers miteinander viereckige Muster bilden, deren Seitenlänge der halben Länge der kleinsten beobachteten akustischen Well entspricht.

**FIGURE 1**

FIGURE 2

# FIGURE 3

CAPTEUR 1

FIGURE 4

TRAITEMENT DE TYPE ADDITIF

SCHEMA DES DEUX CAPTEURS

CAPTEUR 2

$\sum_1$  $\sum_2$

$\frac{1}{2}$  $P_{10}$  $\frac{\partial}{\partial t}$  $\frac{\partial p_1}{\partial t}$  $P_{100}$

$\gamma_1$

$\frac{1}{2}$  $P_{20}$  $\frac{\partial}{\partial t}$  $\frac{\partial p_2}{\partial t}$

$\gamma_2$  $P_{200}$

$\langle \times \rangle_t$  $\langle P_{100}.P_{200} \rangle$

0 015 852

## FIGURE 5

TRAITEMENT DE TYPE MULTIPLICATIF
SCHEMA D UN SEUL CAPTEUR

0 015 852

FIGURE 6

FIGURE 7

FIGURE 8

FIGURE 9

FIGURE 10

FIGURE 11

½ Sphère   r → ∞

FIGURE **12**

FIGURE **13**

$$-\left(p(x+dx)-p(x)\right)=\rho_0\,\gamma(x)$$

FIGURE **14**

1/2 angle d'ouverture

$\vec{k_o}$

$$\overline{P} = \frac{1}{S}\int_S P \cdot dS$$

$$\overline{V}_n = \frac{1}{S}\int_S V_n \cdot dS$$

$$I(\vec{k_o}) = \langle \overline{P} \cdot \overline{V}_n \rangle_t$$

FIGURE 15

(Σ) Surface de contrôle
échantillonnée

## FIGURE 16

FIGURE 17

CAPTEUR 1

CAPTEUR 2

LIGNES
A RETARD

RETARD
REGLABLE

0 015 852